Europäisches Patentamt

European Patent Office

Office européen des brevets

(19)

(11) EP 1 489 221 A1

(12) **EUROPEAN PATENT APPLICATION**
published in accordance with Art. 158(3) EPC

(43) Date of publication:
22.12.2004 Bulletin 2004/52

(51) Int Cl.⁷: **D06M 15/39**

(21) Application number: 03700533.7

(86) International application number:
**PCT/JP2003/000170**

(22) Date of filing: 10.01.2003

(87) International publication number:
**WO 2003/072872 (04.09.2003 Gazette 2003/36)**

(84) Designated Contracting States:
**AT BE BG CH CY CZ DE DK EE ES FI FR GB GR
HU IE IT LI LU MC NL PT SE SI SK TR**

(72) Inventor: **KAWAGUCHI, Satoru,
c/o Nippon Sheet Glass Co. Ltd.
Osaka-shi, Osaka 541-8559 (JP)**

(30) Priority: **27.02.2002 JP 2002051062**

(74) Representative: **Kohler Schmid Möbus
Patentanwälte
Ruppmannstrasse 27
70565 Stuttgart (DE)**

(71) Applicant: **Nippon Sheet Glass Co., Ltd.
Osaka-shi, Osaka 541-8559 (JP)**

(54) **TREATING AGENT FOR RUBBER-REINFORCING GLASS FIBER, RUBBER-REINFORCING CORD MADE WITH THE SAME, AND RUBBER PRODUCT**

(57) There are provided a rubber-reinforcing glass fiber treatment agent capable of improving various properties, in particular the oil resistance, of a rubber product, a rubber-reinforcing cord using the fiber treatment agent, and a rubber product having high oil resistance. The rubber-reinforcing glass fiber treatment agent contains a resorcin-formaldehyde water-soluble condensate and a soap-free acrylonitrile-butadiene copolymer latex. Here, "soap-free" means that polymerization has been carried out using, instead of a conventional emulsifier or surfactant, a polymerization initiator such as potassium persulfate, a styrenesulfonate, an acrylic or allylic reactive emulsifier or water-soluble polymer, or a hydrophilic comonomer such as a water-soluble oligomer or acrylic acid.

**Description**

Technical Field

The present invention relates to a rubber-reinforcing glass fiber treatment agent, a rubber-reinforcing cord obtained by treating glass fibers using the fiber treatment agent, and a rubber product such as a timing belt or a tire containing the rubber-reinforcing cord.

Background Art

Rubber-reinforcing cords comprised of a core comprised of glass fibers or organic fibers made of rayon, nylon, a polyester or the like, and a rubber coating on the surface of the core containing resorcin-formaldehyde which has high affinity to the matrix rubber are embedded in rubber products such as timing belts and tires. It is known that in the case that such a rubber product is placed under a high-temperature high-humidity environment, or is used in oil, the rubber coating rapidly deteriorates, resulting in a marked drop in the strength of the rubber product. Moreover, in the case that such a rubber product is used under a low-temperature environment, the matrix rubber and the rubber coating will break upon being subjected to impact due to being brittle, and hence there will again be a marked drop in the strength. For example, timing belts used in a cold region are used under a harsh environment, for example being subjected to impact while still brittle upon engine startup, and then subsequently being subjected to a high temperature due to waste heat from the engine. In particular, in recent years there has been a trend toward further increasing the density in engine compartments, and hence timing belts are used under yet higher temperature environments.

The rubber coating is formed by applying a solution (hereinafter referred to as a "fiber treatment agent") containing an essential rubber component comprised of a resorcin-formaldehyde water-soluble condensate (hereinafter referred to as an "RF condensate"), and if appropriate another rubber component comprised of an acrylonitrilebutadiene copolymer latex (hereinafter referred to as an "NBR latex"), a vinylpyridine-styrene-butadiene copolymer latex or the like, and other components such as age resistors, emulsifiers and/or surfactants onto fibers that form the core, and drying and thus curing. A rubber-reinforcing cord obtained by impregnating such a fiber treatment agent into glass fibers is described in Japanese Laid-open Patent Publication (Kokai) No. H1-221433.

Glass fibers used as the core have properties such as having a high tensile strength, having a high modulus and hence little temperature dependence, exhibiting almost elastic deformation upon repeated stretching, and having good dimensional stability to moisture and heat. These properties are particularly desirable for a rubber-reinforcing cord. On the other hand, one of the serious drawbacks of glass fibers is being extremely weak to friction between filaments, resulting in the flexural fatigue resistance, which is an important property required of a rubber-reinforcing cord, being poor. Moreover, another drawback is that adhesiveness to rubber is poor. Consequently, in the case of using glass fibers in a rubber-reinforcing cord, to improve the adhesiveness to the matrix rubber, and to improve the flexural fatigue resistance, it is essential to form a rubber coating.

On the other hand, with a rubber-reinforcing cord in which organic fibers are used as the core, adhesiveness to the matrix rubber can be sufficiently secured through the fiber treatment agent only penetrating in two or three layers from the outermost layer of filaments (where a "filament" is the smallest fiber unit). In the case that the fiber treatment agent penetrates in as far as deep layers, the flexural fatigue resistance may conversely drop, and hence the attachment rate of the fiber treatment agent in the rubber-reinforcing cord is often adjusted to be not more than 10wt% in terms of solids.

However, with a rubber-reinforcing cord in which glass fibers are used as the core, to prevent abrasion between filaments, it is necessary to make the fiber treatment agent penetrate in as far as the innermost layer of filaments, and hence the attachment rate of the rubber coating (the attachment rate in terms of solids after drying and curing) is necessarily increased to 15 to 25wt%. A rubber-reinforcing cord in which glass fibers are used as the core is markedly different to a rubber-reinforcing cord in which organic fibers are used as the core in this respect. The properties of a rubber-reinforcing cord in which glass fibers are used as the core are thus greatly affected by the properties of the fiber treatment agent used in treating the core.

With regard to rubber-reinforcing cords in which glass fibers are used as the core, and a fiber treatment agent containing an NBR latex is used as the fiber treatment agent, the present inventors carried out assiduous studies with an aim of improving various properties, and as a result, focusing on the state of the NBR latex in the fiber treatment agent, discovered that the oil resistance of a rubber product can be markedly improved by changing this state. That is, the present inventors carried out various experiments based on the hypothesis described below, and as a result made new findings for improving various properties, in particular the oil resistance, of rubber products.

An aqueous solvent is generally used in a fiber treatment agent, this being for reasons such as handling being easy. An NBR latex will not dissolve or disperse in an aqueous solvent, and hence is first made into a latex by being treated with a low-molecular-weight emulsifier or surfactant. However, the low-molecular-weight emulsifier or surfactant will migrate together with the aqueous solvent toward the surface layer of the rubber coating when the rubber coating is formed. If a large amount of the low-molecular-weight emulsifier or surfactant is present at the surface of the rubber coating, then the adhesiveness to the matrix rubber, or the adhesiveness to an adhesive applied onto the rubber coating will drop. To improve the properties of a rubber product, it is essential to improve the adhesiveness between the rubber-reinforcing cords and the matrix rubber. It is thus effective to reduce the amount of emulsifier or surfactant attached to the NBR latex.

The present invention was accomplished based on the above findings. It is an object of the present invention to provide a rubber-reinforcing glass fiber treatment agent capable of improving the properties, in particular the oil resistance, of a rubber product, a rubber-reinforcing cord using the fiber treatment agent, and a rubber product having high oil resistance.

Disclosure of the Invention

To attain the above object, in a first aspect of the present invention, there is provided a rubber-reinforcing glass fiber treatment agent containing an RF condensate and a soap-free NBR latex.

In the first aspect of the present invention, preferably, a content of the RF condensate is 3 to 35wt% in terms of solids, and a content of the soap-free NBR latex is 35 to 97wt% in terms of solids, relative to the weight of total solids in the fiber treatment agent.

In the first aspect of the present invention, preferably, a content of the total solids is 15 to 35wt%.

To attain the above object, in a second aspect of the present invention, there is provided a rubber-reinforcing cord obtained by treating glass fibers using a fiber treatment agent according to the first aspect of the present invention.

In the second aspect of the present invention, preferably, an attachment rate of the fiber treatment agent in terms of total solids is 10 to 30wt%.

To attain the above object, in a third aspect of the present invention, there is provided a rubber product containing a rubber-reinforcing cord according to the second aspect of the present invention.

Best Mode for Carrying Out the Invention

A detailed description will now be given of a preferable embodiment of the present invention.

A fiber treatment agent according to the present embodiment contains an RF condensate and an NBR latex as conventionally, but is characterized in that as the NBR latex a soap-free one is used. Here, "soap-free" indicates that polymerization has been carried out using, instead of a conventional emulsifier or surfactant, a polymerization initiator such as potassium persulfate, a styrenesulfonate, an acrylic or allylic reactive emulsifier or water-soluble polymer, or a hydrophilic comonomer such as a water-soluble oligomer or acrylic acid. An example of such a soap-free NBR latex is "Nipol SX1503" made by ZEON Corporation. By using the soap-free NBR latex, the adhesiveness between a rubber-reinforcing cord and a matrix rubber can be increased, and as a result various properties of a rubber product can be improved, in particular the oil resistance can be markedly improved.

The soap-free NBR latex does not contain an emulsifier or surfactant, and hence will hardly disperse in the fiber treatment agent as it is. In the case of using glass fibers as a core, it is essential to make the fiber treatment agent reach as far as the innermost layer of glass fibers, and hence in the present embodiment, it is preferable to blend an acrylic alkali-soluble resin or the like into the fiber treatment agent in an amount of 0.1 to 10wt% in terms of solids relative to the weight of solids of the NBR latex. The above-mentioned Nipol SX1503 (solid content 42%) already contains such an amount of an acrylic alkali-soluble resin.

The content of the RF condensate in terms of solids relative to the weight of total solids in the fiber treatment agent is preferably 3 to 35wt%. If this content is less than 3wt%, it will no longer be possible to attach the RF condensate onto the surface of the glass fibers uniformly, and hence the adhesion between the matrix rubber and the rubber-reinforcing cord will drop. On the other hand, if this content exceeds 35wt%, then the rubber coating will become too hard, and hence the flexural fatigue resistance of the rubber-reinforcing cord will be prone to being insufficient.

Moreover, the content of the soap-free NBR latex in terms of solids relative to the weight of total solids in the fiber treatment agent is preferably 35 to 97wt%. The NBR latex is the principal component that determines the properties of the rubber-reinforcing cord, and is better in terms of oil resistance, abrasion resistance and aging resistance than other rubber components. For these functions to be exhibited sufficiently, it is preferable for the content of the NBR latex to be at least 35wt%. On the other hand, if the content of the NBR latex exceeds 97wt%, then the content of the RF condensate will become less than 3wt%.

The RF condensate can be obtained by reacting together resorcin and formaldehyde under the presence of an alkaline catalyst such as an alkali hydroxide, ammonia or an amine. Moreover, the RF condensate is preferably a water-soluble initial addition condensation product (resol) between resorcin and formaldehyde that has an abundance of oxymethyl groups, and preferably has a resorcin to formaldehyde molar ratio of 1:0.5-2.5. Moreover, RF condensates are commercially sold as resol type resins or novolak type resin, and these may also be used. Out of such commercially sold ones, a water-soluble type having a solid content of 5 to 10%, particularly preferably 8wt%, is preferable.

Other components such as a latex stabilizer or an age resistor may be blended into the fiber treatment agent as required. By blending in such a latex stabilizer, age resistor or the like in an amount of 0.1 to 10wt% relative to the weight of total solids in the fiber treatment agent, the dispersibility of the NBR latex in the fiber treatment agent can be improved, without inhibiting the polymerization reaction of the NBR latex.

Moreover, the solvent of the fiber treatment agent may be water only as conventionally, but to improve the dispersibility of the soap-free NBR latex and the RF condensate, it is preferable to blend ammonia into water as appropriate.

The total solid content of the fiber treatment agent is preferably 15 to 35wt%. The total solid content is proportional to the viscosity of the fiber treatment agent. Consequently, if this content is less than 15wt%, then the viscosity of the fiber treatment agent will become too low, and hence it will become necessary to carry out application a plurality of times to sufficiently attach the RF condensate and the soap-free NBR latex to the glass fibers, and thus the efficiency of production of the rubber-reinforcing cord will drop. On the other hand, if the total solid content exceeds 35wt%, then the viscosity of the fiber treatment agent will become too high, and hence it will become difficult for the soap-free NBR latex to reach as far as the innermost layer of glass fibers uniformly.

There are no particular limitations on the method of applying the fiber treatment agent onto the glass fibers, but in view of making the fiber treatment agent reach as far as the innermost layer of glass fibers, it is thought that an immersion method in which the glass fibers are immersed in the fiber treatment agent for a certain time period is best. Excess fiber treatment agent attached to the glass fibers after the glass fibers have been taken out from the fiber treatment agent is removed as appropriate, and then the glass fibers are heated, thus removing the solvent and promoting the polymerization reaction of the NBR latex, whereby a rubber coating is formed. Note that a sizing may or may not have been applied onto the glass fibers during spinning. A plurality of the glass fibers that have been coated with the rubber coating are placed together as appropriate, and twisting is carried out, whereby a rubber-reinforcing cord is formed.

The attachment rate of the fiber treatment agent in terms of total solids in the rubber-reinforcing cord is preferably 10 to 30wt% relative to the total weight of the rubber-reinforcing cord having glass fibers as a core. If the attachment rate is less than 10wt%, then the soap-free NBR latex may not sufficiently reach as far as the innermost layer of glass fibers, and hence the flexural fatigue resistance of the rubber-reinforcing cord may drop. On the other hand, if the attachment rate exceeds 30 wt%, then beyond this the rubber coating will merely become thicker on the outermost layer of glass fibers, and hence there will be little improvement in the properties of the rubber-reinforcing cord.

Rubber-reinforcing cords are embedded in an unvulcanized matrix rubber using a known method, and then heating and vulcanization are carried out under pressure, thus producing a rubber product.

There are no particular limitations on the matrix rubber used in the rubber product; one having good adhesiveness to the RF condensate and the soap-free NBR latex may be selected and used as appropriate. Preferable examples include chloroprene rubber, hydrogenated nitrile rubber, and chlorosulfonated polyethylene rubber.

The rubber product is better in terms of various properties than a rubber product containing rubber-reinforcing cords in which a conventional NBR latex is used, and has excellent oil resistance in particular. The rubber product can thus be suitably used as a timing belt for vehicle engines for which high oil resistance is required. Note that to cope with the increasing density of engine compartments and the accompanying temperature increase, in recent years a heat-resistant rubber such as chlorosulfonated polyethylene rubber or hydrogenated nitrile rubber has come to be used as the matrix rubber of timing belts. When embedding rubber-reinforcing cords in such a heat-resistant rubber, to improve the adhesiveness between the heat-resistant rubber and the rubber-reinforcing cords, the surface of each of the rubber-reinforcing cords may be treated with an adhesive treatment liquid containing a halogen-containing polymer or an isocyanate compound. A Chemlok (trade name, made by Lord Corporation) is preferable as such an adhesive treatment liquid.

The present invention will now be described yet more concretely through an example and comparative examples.

Example 1

Alkali-free glass filaments of diameter 9μm were spun, and several hundred of these were bound together using a sizing, thus preparing 33.7-tex glass fibers. Three of the glass fibers were combined, and the resulting core was immersed in a fiber treatment agent having the composition shown in Table 1 below, and then after being pulled out, excess fiber treatment agent was removed.

TABLE 1

| | Total Component (Parts by Weight) | Solids (Parts by Weight) | Content in Terms of Solids (wt%) |
| --- | --- | --- | --- |
| Soap-Free NBR Latex (Nipol SX1503, Solid Content 42wt%) | 90 | 37.8 | 89.9 |
| RF Condensate (Solid Content 8wt%) | 50 | 4.0 | 9.5 |
| 25% Ammonia Water | 1 | 0.3 | 0.6 |
| Water | 25 | - | - |
| Total | 166 | 42.1 | 100.0 |
| Note: Total solid content of fiber treatment agent is 25.3wt% | | | |

After that, the glass fibers were subjected to heat treatment at 250°C for 2 minutes, thus completely removing the solvent, and hence forming a rubber coating. For the glass fibers coated with the rubber coating, the attachment rate of the fiber treatment agent in terms of total solids was measured using a known means to be 20wt%. Next, primary twisting in the Z-direction (S-direction) of 2.1 twists per inch was applied to the glass fibers. 11 of the twisted glass fibers were then put together, and secondary twisting of 2.1 twists per inch was applied in the S-direction (Z-direction), whereby rubber-reinforcing cords of specification number ECG150 3/11 2.1S(Z) were formed. A halogen-containing polymer adhesive liquid (obtained by diluting Chemlok 233 (trade name, made by Lord Corporation, solid content 23.5wt%) with xylene) was applied uniformly onto the surface of each of the rubber-reinforcing cords, and heating was carried out to remove the solvent. The attachment rate of the adhesive in terms of solids was 3.5wt% of the rubber-reinforcing cord including the adhesive after drying and curing.

The rubber-reinforcing cords were embedded using a known means into a matrix rubber having the composition shown in Table 2 below, and a toothed belt of width 19mm and length 980mm was formed.

TABLE 2

| | Parts by Weight |
| --- | --- |
| Hydrogenated Nitrile Rubber (Zetpol 2020) | 100 |
| Carbon Black | 40 |
| Zinc Oxide | 5 |
| Stearic Acid | 1 |
| Thiokol (TP-95) | 5 |
| Sulfur | 0.5 |
| Tetramethyl Thiuram Disulfide | 1.5 |
| Cyclohexyl Benzothiazyl Sulfenamide | 1 |

The toothed belt was installed in a running test machine equipped with a driving motor at 6,000rpm and 120°C, and a 504-hour running test was carried out with part of the belt always immersed in oil. The length and tensile strength of the toothed belt were each measured before and after the test, and the elongation change and the strength retention rate were calculated. The calculation results are shown in Table 5 below. The calculation formulae were as follows.

$$\text{Elongation change (\%)} = \{(\text{length of belt after running test} - \text{length of belt before running test}) / \text{length of belt before running test}\} \times 100$$

Strength retention rate (%) = (strength after

running test / strength before running test) $\times$ 100

Comparative Example 1

Rubber-reinforcing cords and a toothed belt were prepared as in Example 1 except that the fiber treatment agent shown in Table 3 below was used, and a running test was carried out. The results are again shown in Table 5 below.

TABLE 3

| | Total Component (Parts by Weight) | Solids (Parts by Weight) | Content in Terms of Solids (wt%) |
|---|---|---|---|
| RF Condensate (Solid Content 8wt%) | 30 | 2.4 | 8.4 |
| Vinylpyridine-Butadiene-Styrene Copolymer Latex (Nipol 2518FS, Solid Content 40wt%) | 30 | 12.0 | 41.9 |
| Dicarboxylated Butadiene-Styrene Copolymer Latex (Nipol 2570X5. Solid Content 40wt%) | 15 | 6.0 | 20.9 |
| Chlorosulfonated Polyethylene Latex (Esprene 200. Solid Content 40wt%) | 20 | 8.0 | 27.9 |
| 25% Ammonia Water | 1 | 0.3 | 0.9 |
| Water | 4 | - | - |
| Total | 100 | 28.7 | 100.0 |

Comparative Example 2

Rubber-reinforcing cords and a toothed belt were prepared as in Example 1 except that the fiber treatment agent shown in Table 4 below was used, and a running test was carried out. The results are again shown in Table 5 below.

TABLE 4

| | Total Component (Parts by Weight) | Solids (Parts by Weight) | Content in Terms of Solids (wt%) |
|---|---|---|---|
| NBR Latex (Nipol 1562, Solid Content 41wt%) | 90 | 36.9 | 89.7 |
| RF Condensate (Solid Content 8wt%) | 50 | 4.0 | 9.7 |
| 25% Ammonia Water | 1 | 0.3 | 0.6 |
| Water | 25 | - | - |
| Total | 166 | 41.2 | 100.0 |

TABLE 5

|  | Elongation Change (%) | Strength Retention Rate (%) |
|---|---|---|
| Example 1 | -0.03 | 62 |
| Comparative Example 1 | -0.17 | 44 |
| Comparative Example 2 | -0.08 | 55 |

Industrial Applicability

The present invention, constituted as described above, produces the following effects.

According to the fiber treatment agent of the present invention, the fiber treatment agent contains an RF condensate and a soap-free NBR latex. As a result, the dispersed solution of the RF condensate and the NBR latex sufficiently reaches as far as the innermost layer of glass fibers, and hence a rubber coating containing the NBR latex can be formed on the surface of the glass fibers with no uneven presence of an emulsifier or surfactant. Moreover, the rubber coating has higher adhesiveness to the matrix rubber than a rubber coating using a conventional NBR latex.

Moreover, the contents of the respective components of the fiber treatment agent are adjusted such that the content of the RF condensate is 3 to 35wt% in terms of solids, and the content of the soap-free NBR latex is 35 to 97wt% in terms of solids, relative to the weight of total solids in the fiber treatment agent. As a result, problems such as the rubber coating becoming too hard and the adhesiveness to the matrix rubber dropping can be prevented.

Moreover, the total solid content of the fiber treatment agent, the total solid content, is adjusted to 15 to 35wt%. As a result, the viscosity of the fiber treatment agent can be kept in an optimum range, and hence the fiber treatment agent can reliably be made to reach as far as the innermost layer of glass fibers.

Moreover, the rubber-reinforcing cord is manufactured using a fiber treatment agent as described above. As a result, various properties such as the heat resistance and flexural fatigue resistance can be improved, and in particular the oil resistance can be improved.

Moreover, the rubber product contains such rubber-reinforcing cords. As a result, a rubber product such as a timing belt for a vehicle engine used under a harsh environment can be produced.

**Claims**

1. A rubber-reinforcing glass fiber treatment agent containing a resorcin-formaldehyde water-soluble condensate and a soap-free acrylonitrile-butadiene copolymer latex.

2. A rubber-reinforcing glass fiber treatment agent as claimed in claim 1, wherein a content of the resorcin-formaldehyde water-soluble condensate is 3 to 35wt% in terms of solids, and a content of the soap-free acrylonitrile-butadiene copolymer latex is 35 to 97wt% in terms of solids, relative to a weight of total solids in the fiber treatment agent.

3. A rubber-reinforcing glass fiber treatment agent as claimed in claim 1, wherein a total solid content is 15 to 35wt%.

4. A rubber-reinforcing glass fiber treatment agent as claimed in claim 2, wherein a total solid content is 15 to 35wt%.

5. A rubber-reinforcing cord obtained by treating glass fibers using a fiber treatment agent as claimed in claim 1.

6. A rubber-reinforcing cord as claimed in claim 5, wherein an attachment rate of the fiber treatment agent in terms of total solids is 10 to 30wt%.

7. A rubber product containing a rubber-reinforcing cord as claimed in claim 5.

**EP 1 489 221 A1**

<table>
<tr><td colspan="2" align="center">**INTERNATIONAL SEARCH REPORT**</td><td>International application No.<br>PCT/JP03/00170</td></tr>
</table>

A. CLASSIFICATION OF SUBJECT MATTER
   Int.Cl$^7$   D06M15/39

According to International Patent Classification (IPC) or to both national classification and IPC

B. FIELDS SEARCHED

Minimum documentation searched (classification system followed by classification symbols)
   Int.Cl$^7$   D06M15/00-15/72, C08L1/00-101/14

Documentation searched other than minimum documentation to the extent that such documents are included in the fields searched

| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| E,X | JP 2002-339255 A (Honda Motor Co., Ltd.),<br>27 November, 2002 (27.11.02),<br>Claims 1, 3; example 2<br>(Family: none) | 1-7 |
| A | JP 11-158744 A (Nippon Glass Fiber Co., Ltd.),<br>15 June, 1999 (15.06.99),<br>Example 2<br>(Family: none) | 1-7 |
| A | US 5523154 A1 (Nippon Glass Fiber Co., Ltd.),<br>04 June, 1996 (04.06.96),<br>Comparative example 3<br>& EP 624557 A1          & WO 94/12443 A | 1-7 |

[X] Further documents are listed in the continuation of Box C.       [ ] See patent family annex.

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>   14 April, 2003 (14.04.03) | Date of mailing of the international search report<br>   30 April, 2003 (30.04.03) |
|---|---|
| Name and mailing address of the ISA/<br>   Japanese Patent Office | Authorized officer |
| Facsimile No. | Telephone No. |

Form PCT/ISA/210 (second sheet) (July 1998)

EP 1 489 221 A1

## INTERNATIONAL SEARCH REPORT

International application No.

PCT/JP03/00170

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 5-320299 A (Mitsubishi Yuka Badische Co., Ltd.), 03 December, 1993 (03.12.93), Full text (Family: none) | 1-7 |
| A | JP 10-204134 A (The Nippon Synthetic Chemical Industry Co., Ltd.), 04 August, 1998 (04.08.98), Full text (Family: none) | 1-7 |

Form PCT/ISA/210 (continuation of second sheet) (July 1998)

9